# EUROPÄISCHE PATENTSCHRIFT

(11) **EP 3 108 539 B1**
(45) Veröffentlichungstag und Bekanntmachung des Hinweises auf die Patenterteilung: **04.07.2018**
(21) Anmeldenummer: 14706544.5
(22) Anmeldetag: 21.02.2014
(51) Int. Cl.: H01Q 3/06, H01Q 1/22, G01B 15/04, G01F 23/284, H04B 17/10

(54) **FÜLLSTANDMESSGERÄT MIT EINRICHTUNG ZUR ENERGIEÜBERTRAGUNG**
LEVEL INDICATOR COMPRISING AN ENERGY TRANSMISSION DEVICE
APPAREIL DE MESURE DE NIVEAU DE REMPLISSAGE DOTÉ D'UN DISPOSITIF DE TRANSFERT D'ÉNERGIE

(43) Veröffentlichungstag der Anmeldung: 28.12.2016
(73) Patentinhaber: VEGA Grieshaber KG, 77709 Wolfach (DE)
(72) Erfinder: FEHRENBACH, Josef, 77716 Haslach (DE); WELLE, Roland, 77756 Hausach (DE); DIETERLE, Levin, 77709 Wolfach (DE)
(74) Vertreter: Maiwald Patent- und Rechtsanwaltsgesellschaft mbH
(86) Internationale Anmeldenummer: PCT/EP2014/053433
(87) Internationale Veröffentlichungsnummer: WO 2015/124202

(56) Entgegenhaltungen:
- EP-A1- 2 363 694
- DE-A1- 10 149 851
- DE-A1-102004 041 857
- FR-A1- 2 907 546
- GB-A- 788 670
- US-A1- 2004 108 951
- US-A1- 2010 188 296

## Beschreibung

### Gebiet der Erfindung

Die Erfindung betrifft die Füllstandmessung. Insbesondere betrifft die Erfindung ein Füllstandmessgerät zur Bestimmung der Topologie einer Oberfläche eines Füllguts oder Schüttguts, die Verwendung eines Füllstandmessgeräts zur Bestimmung einer Viskosität oder Dichte einer bewegten Flüssigkeit, und die Verwendung eines Füllstandmessgeräts zur Bestimmung eines Massestroms eines sich auf einem Förderband befindenden Schüttguts.

### Hintergrund

Die beispielsweise im Bereich der Objektüberwachung oder Schüttgutüberwachung eingesetzten Messgeräte senden beispielsweise elektromagnetische Wellen oder Ultraschallwellen in Form eines Sendesignals aus, die an der Füllgutoberfläche oder dem entsprechenden Objekt zumindest teilweise reflektiert werden. Das zumindest teilweise reflektierte Sendesignal (auch Messsignal genannt) kann daraufhin von der Antenneneinheit des Messgeräts aufgenommen und von der damit verbundenen Elektronik ausgewertet werden.

Durch ein Abscannen der Oberfläche des Füllguts oder Objekts ist es möglich, die Topologie der Füllgutoberfläche bzw. des Objekts zu bestimmen. Unter dem Begriff "Topologie" ist im Bereich der Füllstandmessung die Form der Oberfläche des Füllguts oder Schüttguts zu verstehen. In diesem Zusammenhang kann auch der Begriff "Topografie" verwendet werden.

Zur Versorgung der Messgeräte mit elektrischer Energie und zur Übertragung der gewonnenen Daten an ein externes Gerät können die Messgeräte mit einer sogenannten Vier-Leiterschnittstelle ausgerüstet sein. In einer alternativen Ausführung können solche Messgeräte auch mit einer sogenannten Zwei-Leiterschnittstelle (4 .. 20 mA Schnittstelle) ausgerüstet sein.

Zur Erfassung der Topologie der Füllgutoberfläche ist es möglich, das komplette Füllstandmessgerät (beispielsweise ein Füllstandradarmessgerät) rotieren zu lassen. Auch ist es möglich, lediglich die Sende- und/oder Empfangseinheit, im Folgenden Antenneneinheit genannt, rotieren zu lassen. Das Sendesignal kann in diesem Fall über einen Hohlleiter von der Hochfrequenzeinheit, die sich im Gehäuse des Füllstandmessgeräts befindet, an die Antenneneinheit übertragen werden. US2004/108951 A1 und FR2907546 A1 offenbaren Füllstandmessgeräte, bei denen die Antenneneinheit drehbar ist.

### Zusammenfassung der Erfindung

Es ist eine Aufgabe der Erfindung, ein alternatives Füllstandmessgerät zur Erfassung einer Topologie einer Füllgut- oder Schüttgutoberfläche mit einer rotierenden Antenne anzugeben.

Diese Aufgabe wird durch die Merkmale der unabhängigen Patentansprüche gelöst. Weiterbildungen der Erfindung ergeben sich aus den abhängigen Patentansprüchen und der folgenden Beschreibung.

Ein erster Aspekt der Erfindung betrifft ein Füllstandmessgerät zur Bestimmung der Topologie einer Oberfläche eines Füllguts oder Schüttguts. Das Füllstandmessgerät weist eine drehbare Antenneneinheit auf. Auf der Antenneneinheit befindet sich eine Anordnung (ein Array) an Strahlerelementen oder Antennenelementen oder Einzelantennen, die dem Abstrahlen eines Messsignals in Richtung der Füllgutoberfläche und/oder dem Empfang des an der Füllgutoberfläche reflektierten Messsignals (Empfangssignal) dienen. Die Strahlerelemente des Arrays können in einer Ebene angeordnet sein, welche beispielsweise mit der Rotationsachse der Antenneneinheit einen Winkel α einschließt, der ungleich 90° beträgt. Beispielsweise beträgt der Winkel α zwischen 30 und 60°, beispielsweise 45°.

Für das Vorsehen eines Winkels α von ungleich 90° zur senkrechten, direkten Verbindungslinie zwischen der Antenne und der Füllgutoberfläche kann der Messbereich der Antenne vergrößert werden. Diese Vergrößerung des Messbereichs bedeutet, dass die Topografie der Füllgutoberfläche für einen großen Bereich und Füllstand mit hoher Qualität erfasst werden kann.

Die Rotationsachse der Antenneneinheit kann beispielsweise eine vertikale Rotationsachse sein, wenn die Antenneneinheit zusammen mit dem Füllstandmessgerät in oder an einem Behälter, der das Füllgut enthält, installiert ist.

Bei den Strahlerelementen handelt es sich beispielsweise um im Wesentlichen zweidimensionale, flächig ausgebildete Patches. Die Strahlerelemente können aber auch in Form von anderweitig ausgebildeten Strahlern vorgesehen sein.

Das Array ist beispielsweise ein eindimensionales Array mit einer einzelnen Spalte an Strahlerelementen. Das Array kann aber auch ein zweidimensionales Array mit mehreren parallel zueinander angeordneten Spalten und mehreren senkrecht dazu angeordneten Zeilen, die sich jeweils aus den einzelnen Strahlerelementen zusammensetzen, ausgeführt sein.

Für die Messung der Topologie der Füllgut- oder Schüttgutoberfläche kann die Antenneneinheit in Rotation versetzt werden. Es ist eine Hochfrequenz- und Signalverarbeitungseinheit vorgesehen, die an der drehbaren Antenneneinheit angebracht ist und der Erzeugung des Messsignals und einer zumindest teilweisen Verarbeitung des empfangenen, reflektierten Messsignals (Empfangssignal) dient. Diese Signal(vor)verarbeitung findet also direkt an der Antenneneinheit statt. Die Hochfrequenz- und Signalverarbeitungseinheit dreht sich also mit der Antenneneinheit mit, wenn diese in Rotation versetzt wird, um die Topologiemessung vorzunehmen.

Weiterhin ist eine Energieversorgungs- und Kommunikationseinheit vorgesehen, die im stationären Bereich des Füllstandmessgeräts angeordnet ist und sich somit nicht mit der Antenneneinheit mitdreht. Die Energieversorgungs- und Kommunikationseinheit weist einen oder mehrere Schleifkontakte und/oder ein oder mehrere Spulenpaare auf, welche die Energieversorgungs- und Kommunikationseinheit an die Hochfrequenz- und Signalverarbeitungseinheit ankoppeln, um diese mit der für den Messbetrieb erforderlichen elektrischen Energie zu versorgen.

Auch kann vorgesehen sein, dass über diese Schnittstelle/Schnittstellen Daten von der Hochfrequenz- und Signalverarbeitungseinheit an die Energieversorgungs- und Kommunikationseinheit übertragen werden.

Beispielsweise ist die Hochfrequenz- und Signalverarbeitungseinheit in die Antenneneinheit integriert.

Gemäß einer weiteren Ausführungsform der Erfindung weist das Füllstandmessgerät eine Energieversorgungs- und Kommunikationsschnittstelle zum Anschluss der Energieversorgungs- und Kommunikationseinheit an eine Zweidrahtleitung auf, über welche das Füllstandmessgerät mit der für den Messbetrieb notwendigen Energie versorgt werden kann und über welche Messdaten an eine entfernte Steuereinheit übertragen werden können.

Das Füllstandmessgerät bezieht seine zur Messung und zur Rotation der Antenne benötigte Energie ausschließlich über die Zweileiterverbindung, welche darüber hinaus zur Kommunikation mit der Steuereinheit, insbesondere zur Ausgabe zumindest eines Topologiemesswertes oder eines daraus abgeleiteten Messwertes (zum Beispiel der Masse im Behälter) ausgeführt ist.

Gemäß einer weiteren Ausführungsform der Erfindung weist das Füllstandmessgerät ein erstes Stator-Rotor-Spulenpaar auf, welches zum drahtlosen Übertragen der für den Messbetrieb erforderlichen Energie von der Energieversorgungs- und Kommunikationseinheit an die Antennenvorrichtung ausgeführt ist. In anderen Worten kann die elektrische Energie drahtlos übertragen werden. Das ist vorteilhaft, da die Antennenvorrichtung gegenüber dem Grundkörper des Füllstandmessgeräts rotieren soll, während die Messung stattfindet.

Gemäß einer weiteren Ausführungsform der Erfindung weist das Füllstandmessgerät ein zweites Stator-Rotor-Spulenpaar zum drahtlosen Übertragen der von der Antenneneinheit empfangenen und von der Hochfrequenz- und Signalverarbeitungseinheit verarbeiteten Messsignale von der Hochfrequenz- und Signalverarbeitungseinheit an die Energieversorgungs- und Kommunikationseinheit auf. Schleifkontakte sind somit nicht erforderlich.

Alternativ oder zusätzlich zu dem ersten und/oder zweiten Stator-Rotor-Spulenpaar kann auch jeweils ein Schleifkontakt vorgesehen sein.

Gemäß einer weiteren Ausführungsform der Erfindung weist das Füllstandmessgerät einen Drehgeber zur Bestimmung des Drehwinkels der Antenneneinheit auf.

Beispielsweise ist ein elektrischer Motor zum Rotieren der Antenneneinheit während des Abstrahlens des Messsignals vorgesehen, wobei der Drehgeber, der erste Schleifkontakt bzw. das erste Spulenpaar und der elektrische Motor auf einer gemeinsamen Drehachse angeordnet sind.

Gemäß einer weiteren Ausführungsform der Erfindung weist das Füllstandmessgerät eine drahtlose Nahbereichskommunikationseinrichtung auf, welche an der Hochfrequenz- und Signalverarbeitungseinheit angebracht ist und zur Übertragung der von der Hochfrequenz- und Signalverarbeitungseinheit erzeugten Messdaten ausgeführt ist.

Gemäß einer weiteren Ausführungsform der Erfindung ist der Schleifkontakt oder das Spulenpaar sowohl zur Energieübertragung an die Hochfrequenz- und Signalverarbeitungseinheit als auch zur Übertragung von Daten von der Hochfrequenz- und Signalverarbeitungseinheit an die Energieversorgungs- und Kommunikationseinheit ausgeführt.

In diesem Fall ist beispielsweise ein Zeitmultiplexing oder eine geeignete Signalumformung (Modulation) vorgesehen, um sowohl Daten als auch Energie zu übertragen.

Gemäß einem weiteren Aspekt der Erfindung ist die Verwendung eines oben und im Folgenden beschriebenen Füllstandmessgeräts zur Bestimmung weiterer physikalischer Kenngrößen einer bewegten Flüssigkeit angegeben. Beispielsweise kann die Viskosität und/oder Dichte der bewegten Flüssigkeit bei bekannter Behältergeometrie und höherer Drehzahl über die Topologie der Flüssigkeitsoberfläche bestimmt werden.

Gemäß einem weiteren Aspekt der Erfindung ist die Verwendung eines oben und im Folgenden beschriebenen Füllstandmessgeräts zur Bestimmung eines Massestroms eines sich auf einem Förderband befindenden Schüttguts angegeben.

Gemäß einem weiteren Aspekt der Erfindung ist ein Verfahren zur Bestimmung der Topologie einer Oberfläche eines Füllguts oder Schüttguts angegeben. Zunächst wird eine Antenneneinheit mit der für den Messbetrieb erforderlichen elektrischen Energie durch eine Energieversorgungs- und Kommunikationseinheit versorgt, welche über einen Schleifkontakt oder ein Spulenpaar an die Antenneneinheit gekoppelt ist. Zur Messung wird die Antenneneinheit gedreht und das Messsignal durch eine Hochfrequenz- und Signalverarbeitungseinheit der Antenneneinheit erzeugt. Dieses Messsignal wird dann in Richtung einer Füllgut- oder Schüttgutoberfläche abgestrahlt und das dort reflektierte Messsignal wird danach wieder von der Antenneneinheit empfangen. Hierfür weist die Antenneneinheit ein Array an Strahlerelementen auf. In einem weiteren Schritt erfolgt die zumindest teilweise Verarbeitung des empfangenen reflektierten Messsignals durch die Hochfrequenz- und Signalverarbeitungseinheit der rotierenden Antenneneinheit.

Es kann vorgesehen sein, dass zum Aussenden des Messsignals andere Strahlerelemente verwendet werden als zum Empfangen des reflektierten Messsignals. Es kann aber auch vorgesehen sein, dass ein Teil der Strahlerelemente oder alle Strahlerelemente sowohl zum Aussenden des Messsignals als auch zum Empfangen des Messsignals eingerichtet sind.

Das verarbeitete Messsignal kann dann drahtlos oder drahtgebunden an die Energieversorgungs- und Kommunikationseinheit des Messgeräts übertragen werden.

Diese kann dann eine weitere Datenverarbeitung durchführen und die Daten an eine entfernt angeordnete Steuereinheit über eine Zweitdrahtleitung übertragen, über welche auch die Energie, die für den Messbetrieb erforderlich ist, übertragen wird.

Somit kann eine Kombination von Energieübertragung, Winkelerfassung, Rotationsantrieb und Datenübertragung in der drehbaren Sensoreinheit (Antenneneinheit) vorgesehen sein, wobei die dafür benötigten Elektronikeinheiten zwischen dem stationären Geräteteil und dem rotierenden Geräteteil verteilt werden.

Das Füllstandmessgerät kann demnach eine rotierende Antenne mit einer für die Füllstandmessung verwendeten Teilelektronikeinheit auf der rotierenden Geräteeinheit und zusätzlichen Einheiten zur Energie- und Informationsübertragung zwischen dem stationären Teil und dem rotierenden Teil aufweisen.

Im Folgenden werden mit Verweis auf die Figuren Ausführungsbeispiele der Erfindung beschrieben.

Kurze Beschreibung der Figuren
Fig. 1 zeigt ein Füllstandmessgerät mit rotierbarer Antenne.
Fig. 2 zeigt ein Füllstandmessgerät gemäß einem Ausführungsbeispiel der Erfindung.
Fig. 3 zeigt ein Füllstandmessgerät gemäß einem weiteren Ausführungsbeispiel der Erfindung.
Fig. 4 zeigt ein Füllstandmessgerät gemäß einem weiteren Ausführungsbeispiel der Erfindung.
Fig. 5A zeigt einen elektrischen Antrieb gemäß einem Ausführungsbeispiel der Erfindung.
Fig. 5B zeigt eine Energieerzeugungseinheit gemäß einem Ausführungsbeispiel der Erfindung.
Fig. 5C zeigt eine Winkelerfassungseinheit (Drehgeber) gemäß einem Ausführungsbeispiel der Erfindung.
Fig. 5D zeigt ein Füllstandmessgerät gemäß einem weiteren Ausführungsbeispiel der Erfindung.
Fig. 6 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

Die vorliegende Erfindung kann in Verbindung mit Füllstandmessgeräten verwendet werden, welche zumindest eine während einer Messung mechanisch um ein oder mehrere Achsen rotierende Sende- und/oder Empfangseinheit, die im Folgenden auch als Antenneneinheit bezeichnet ist, aufweisen. Im besonderen Interesse stehen hierbei Radar-Füllstandmessgeräte, welche durch mechanische Rotation der Sende- und/oder Empfangseinheit Echokurven aus unterschiedlichen Raumrichtungen im Behälter erfassen und aus den daraus abgeleiteten Kennwerten den Verlauf der Oberfläche des Füllguts (Topologie) im Behälter errechnen. Die Topologie kann vom Messgerät direkt ausgegeben werden oder aber in einen weiteren Kennwert, beispielsweise das im Behälter enthaltene Volumen oder die im Behälter enthaltene Masse an Füllgut, umgerechnet werden.

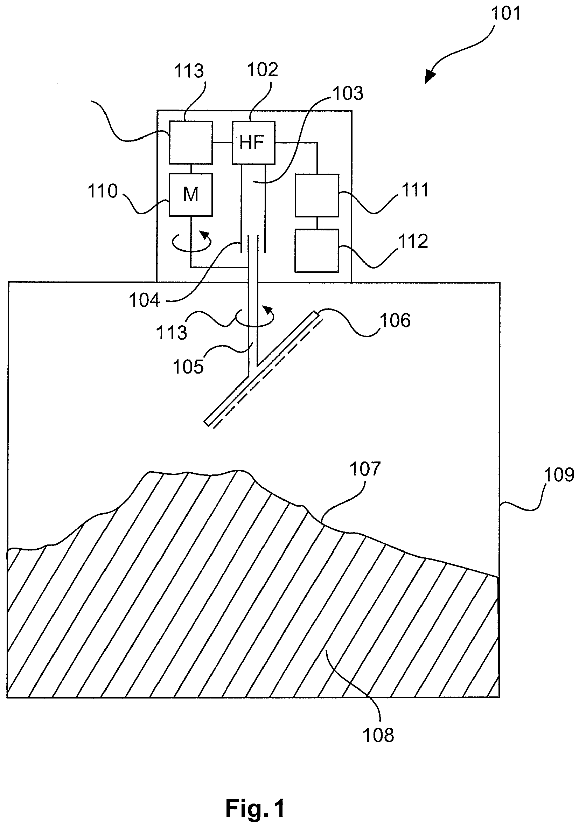

Fig. 1 zeigt ein Füllstandmessgerät 101, welches durch Aussenden eines elektromagnetischen oder akustischen Signals in Richtung einer Füllgutoberfläche 107 eines Füllguts 108 ein Abbild der Reflexionsverhältnisse im Behälter 109 erfasst. Insbesondere kann das Füllstandmessgerät aus dem an der Oberfläche reflektierten Messsignal die Topologie der Füllgutoberfläche berechnen.

Das Messgerät 101 weist beispielsweise eine Hochfrequenzeinheit 102, welche hochfrequente Signale, beispielsweise im Bereich von 79 GHz, in einen Hohlleiter 103 einkoppelt, auf. An den Hohlleiter 103 ist eine Drehkopplung 104 angeschlossen, welche die Mikrowellensignale in einen gegenüber dem ersten Hohlleiter 103 verdrehbaren zweiten Hohlleiter 105 weiterleitet.

Der zweite Hohlleiter kann fest mit zumindest einer Sende- und/oder Empfangseinrichtung, beispielsweise einer Planarantenne 106, verbunden sein, welche die Mikrowellensignale in Richtung der Oberfläche 107 des Mediums 108 im Behälter 109 abstrahlt und/oder von diesem empfängt.

Die gegenüber dem Behälter 109 verdrehbare Kombination aus zweitem Hohlleiter 105 und Antenne 106 wird beispielsweise durch einen Motor 110 in Rotation versetzt. Auf diese Weise kann eine Vielzahl an Echokurven aus unterschiedlichen Winkelrichtungen des Behälters erfasst werden. Um aus den gemessenen Echokurven ein digitales Abbild der Topologie der Oberfläche 107 des Mediums zu errechnen, benötigt die dafür zuständige Signalverarbeitungseinheit 111 den zu jeder erfassten Echokurve zugehörigen absoluten Rotationswinkel 113 der Abstrahleinheit 106 gegenüber dem Behälter 109.

Der Rotationswinkel kann durch einen Drehgeber 112 erfasst werden und danach der Signalverarbeitungseinheit 111 zur Verfügung gestellt werden.

Die Signalverarbeitungseinheit kann über eine hier nicht dargestellte Verbindung mit einer Energieversorgungs- und Kommunikationseinheit 113 verbunden sein, welche einen oder mehrere Messwerte oder daraus abgeleitete Kenngrößen nach außen hin zur Verfügung stellt, beispielsweise über eine 4 ... 20 mA Stromschnittstelle und/oder über eine digitale Kommunikation. Es kann auch vorgesehen sein, dass die Energieversorgungs- und Kommunikationseinheit 113 eine Vier-Leiterschnittstelle besitzt, über welche das Messgerät 101 mit Energie versorgt wird, und über welche das Messgerät 101 einen oder mehrere Messwerte oder daraus abgeleitete Kenngrößen nach außen hin zur Verfügung stellt.

Die Drehkopplung kann beispielsweise für niedrige Frequenzen, beispielsweise im Bereich von 6 GHz oder 24 GHz, relativ preisgünstig hergestellt werden, da die dabei zu erfüllenden Genauigkeiten der mechanischen Konstruktion aufgrund der großen Wellenlänge der Signale eher gering sind. Für höhere Frequenzen, beispielsweise für Signale im Bereich von 79 GHz, steigen die Anforderungen an die mechanische Konstruktion der Drehkopplung mitunter stark an. Zudem ist im Rahmen der Prozessmesstechnik mit erhöhten Anforderungen an die Einsatztemperatur des Füllstandmessgeräts zu rechnen, welche in Verbindung mit den kleinen Toleranzen der Mechanik durch eine Drehkopplung schwer zu erfüllen sind.

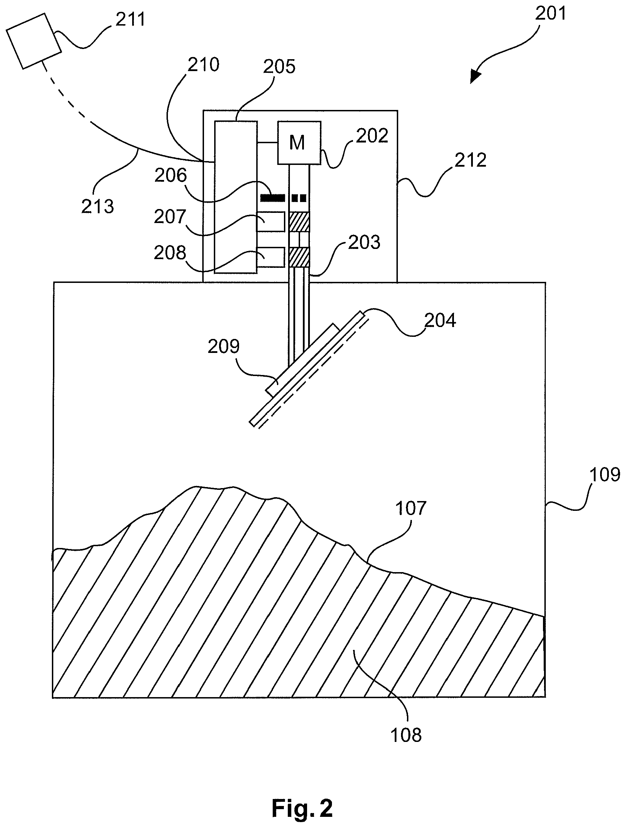

Fig. 2 zeigt ein erstes Beispiel eines Füllstandmessgeräts gemäß einem Ausführungsbeispiel der Erfindung. Das Messgerät 201 weist einen Grundkörper 212 auf, in welchem ein Motor 202 angeordnet ist, der ein (nicht notwendiger Weise als Hochfrequenzhohlleiter ausgeführtes) Rohr 203 und die daran befestigte Sende- und/oder Empfangseinheit (auch als drehbare Antenneneinheit bezeichnet) 204 in Rotation versetzt.

Weiterhin weist das Messgerät 201 eine Energieversorgungs- und Kommunikationseinheit 205 auf, welche mit dem Motor 202, einem Drehgeber 206 sowie zwei Schleifkontakten 207, 208 verbunden ist. Der erste Schleifkontakt 207 kann dazu ausgeführt sein, die von der Hochfrequenz- und Signalverarbeitungseinheit 209 benötigte elektrische Energie auf das rotierende Rohr 203 zu übertragen. Der zweite Schleifkontakt 208 kann dazu ausgeführt sein, den vom Drehgeber 206 erfassten Winkel an die Signalverarbeitungseinheit 209 zu übertragen.

Weiterhin kann der zweite Schleifkontakt dazu ausgeführt sein, Einstellwerte oder Softwareupdates, welche vom Benutzer bzw. von einer entfernt angeordneten Zentrale 211 beispielsweise durch digitale Kommunikation über eine Zweidrahtleitung an einer 4..20 mA Schnittstelle 210 eingespeist werden, an die Signalverarbeitungseinheit 209 zu übertragen.

Nach Abschluss eines Messzyklus kann die Hochfrequenz- und Signalverarbeitungseinheit 209 den zweiten Schleifkontakt 208 dazu nutzen, die ermittelten Messwerte an die Energieversorgungs- und Kommunikationseinheit 205 zu übermitteln, welche die entsprechenden Werte nach außen hin zur Verfügung stellen kann.

Des Weiteren ist es möglich, den Drehgeber 206 in das Rohr 203 zu integrieren um die Anzahl der zu sendenden Daten zu reduzieren.

Als Drehgeber mag sowohl im vorliegenden Ausführungsbeispiel als auch in den nachfolgend dargelegten Ausführungsbeispielen jede Form bekannter Drehgeber verwendet werden. Insbesondere kann ein kontaktloser Drehgeber verwendet werden, der nach dem Laserprinzip, dem induktiven Prinzip, oder dem kapazitiven Prinzip arbeitet, also insbesondere auch ein Resolver oder HALL-Sensor.

Als Motor kann sowohl im vorliegenden Ausführungsbeispiel als auch in den nachfolgend dargelegten Ausführungsbeispielen jede Form bekannter Elektromotoren verwendet werden, also insbesondere ein Gleichstrommotor, ein Schrittmotor, ein Reluktanzmotor, ein bürstenloser Gleichstrommotor, ein Synchronmotor oder auch ein Asynchronmotor.

Die Ansteuerungselektronik dieser Motoren mag im Motor selbst integriert sein, oder auch im Füllstandmessgerät und in diesem Fall beispielsweise in der Energieversorgungs- und Kommunikationseinheit 205 enthalten sein. Weiterhin kann es vorgesehen sein, bei der Verwendung von Servomotoren den Drehgeber 206 bereits im Motor 202 selbst zu integrieren.

Das Ausführungsbeispiel der Fig. 2 beseitigt die Notwendigkeit der Verwendung einer hochpreisigen Drehkupplung 104, indem die ursprünglich nur im stationären Teil des Füllstandmessgerätes 101 enthaltene Elektronik nun teilweise in den rotierenden Teil ausgelagert wird. In diesem Fall kann der Einsatz mechanischer Schleifkontakte 207, 208 vorgesehen sein, welche in ihrer Lebensdauer jedoch beschränkt sind.

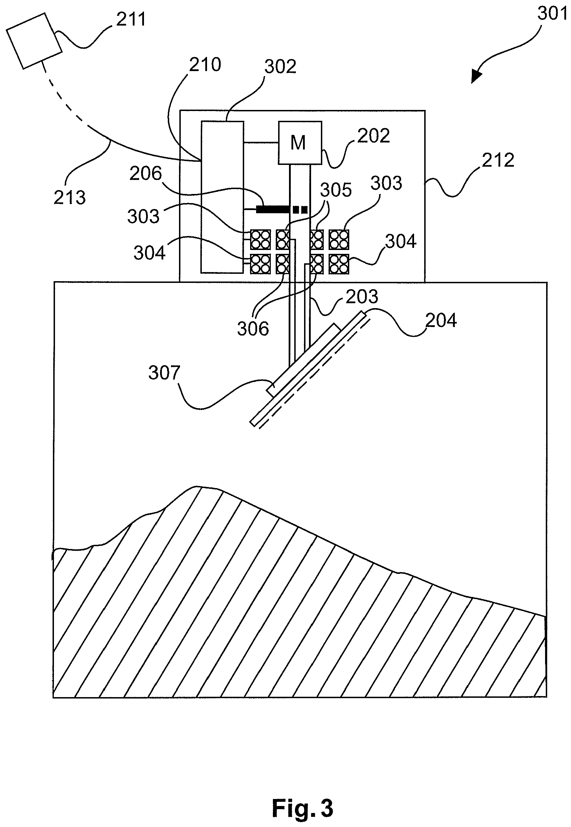

Fig. 3 zeigt daher ein weiteres Ausführungsbeispiel eines Messgerätes, welches auch diesen Nachteil beseitigt. Das Messgerät 301 weist eine modifizierte Energieversorgungs- und Kommunikationseinheit 302 auf, welche mit einer ersten ringförmigen Statorspule 303 sowie einer zweiten ringförmigen Statorspule 304 verbunden ist.

Am vom Motor 202 angetriebenen Rohr 203 befindet sich in räumlicher Nähe zur ersten Statorspule 303 eine erste Rotorspule 305, welche mit der modifizierten Hochfrequenz- und Signalverarbeitungseinheit 307 verbunden ist. Weiterhin befindet sich in räumlicher Nähe zur zweiten Statorspule 304 eine zweite Rotorspule 306, welche ebenfalls mit der Hochfrequenz- und Signalverarbeitungseinheit 307 verbunden ist.

Das erste Stator- / Rotorspulenpaar 303, 305 dient dazu, die von der Energieversorgungs- und Kommunikationseinheit 302 bereitgestellte elektrische Energie an die Hochfrequenz- und Signalverarbeitungseinheit 307 zu übertragen. Die Energieversorgungs- und Kommunikationseinheit 302 kann dazu die erste Statorspule in geeigneter Art und Weise ansteuern. Die modifizierte Hochfrequenz- und Signalverarbeitungseinheit 307 kann Schaltungskomponenten beinhalten, die geeignet sind, aus den an der ersten Rotorspule 305 abgegriffenen Signalen die für den Betrieb der Hochfrequenz- und Signalverarbeitungseinheit 307 notwendigen Versorgungsspannungen zu generieren.

Das zweite Stator- / Rotorspulenpaar 304, 306 dient dazu, die von der Energieversorgungs- und Kommunikationseinheit 302 übermittelten Informationen (beispielsweise Parameterwerte, Einstellwerte, Softwareupdates, Winkelwerte) an die Hochfrequenz- und Signalverarbeitungseinheit 307 zu übertragen. Die Energieversorgungs- und Kommunikationseinheit 302 kann dazu die zweite Statorspule in geeigneter Art und Weise ansteuern.

Die modifizierte Hochfrequenz- und Signalverarbeitungseinheit 307 kann Schaltungskomponenten beinhalten, die geeignet sind, aus den an der zweiten Rotorspule 306 abgegriffenen Signalen die übermittelten Informationen zu extrahieren. Weiterhin kann die modifizierte Hochfrequenz- und Signalverarbeitungseinheit 307 auch geeignet sein, ihrerseits Informationen (Statusinformationen, ermittelte Messwerte) über die zweite Rotorspule 306 und die zweite Statorspule 304 an die modifizierte Energieversorgungs- und Kommunikationseinheit 302 zu übertragen, um diese dem Benutzer nach außen hin bereitzustellen.

Es sei an dieser Stelle darauf hingewiesen, dass die erste und zweite Statorspule in einer gemeinsamen Einheit realisiert werden können. Gleiches gilt für die erste und zweite Rotorspule. Weiterhin kann vorgesehen sein, für die Energieübertragung und die Informationsübertragung ein und dieselbe Einheit zu nutzen, beispielsweise durch Zeitmultiplex oder durch geeignete Signalformung (Modulation). Letzteres gilt auch für das in Fig. 2 dargestellte Ausführungsbeispiel mit Schleifkontakten.

Bei der Messvorrichtung gemäß Fig. 3 werden auch zeitkritische Informationen (wie die Winkelwerte des Sensors 206) kontaktlos an die Signalverarbeitungseinheit 307 übertragen. Unter EMV-Einfluss mag eine solche Übertragung von zeitkritischen Informationen schwierig sein.

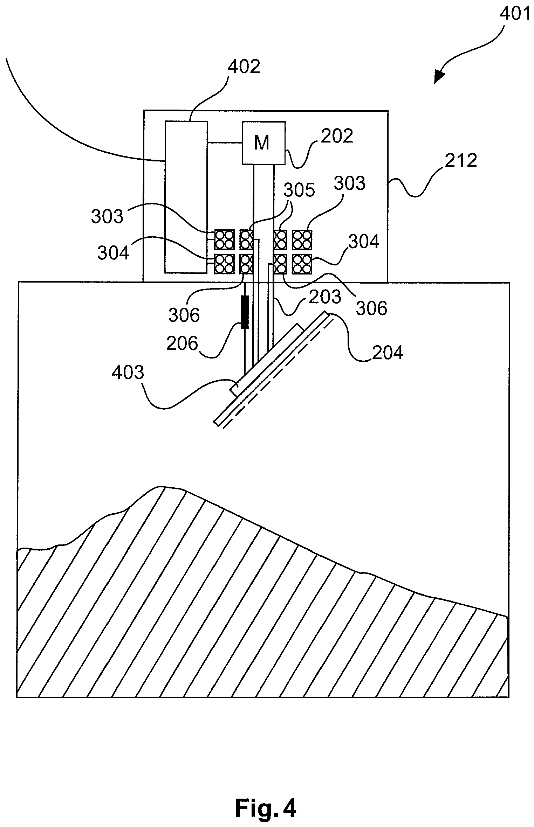

Fig. 4 zeigt daher ein weiteres Ausführungsbeispiel eines Messgerätes 401 mit einer Energieversorgungs- und Kommunikationseinheit 402. Die Anordnung unterscheidet sich von der in Fig. 3 dargestellten Anordnung durch eine Verlagerung des Drehgebers 206 hin zum rotierenden Sensorteil 203. Die modifizierte Hochfrequenz- und Signalverarbeitungseinheit 403 ist nun direkt mit dem Drehgeber 206 verbunden und liest von diesem den aktuellen Drehwinkel direkt ein. Eine Übertragung dieser Information vom nicht rotierenden Sensorteil zum rotierenden Sensorteil wird hierdurch vermieden.

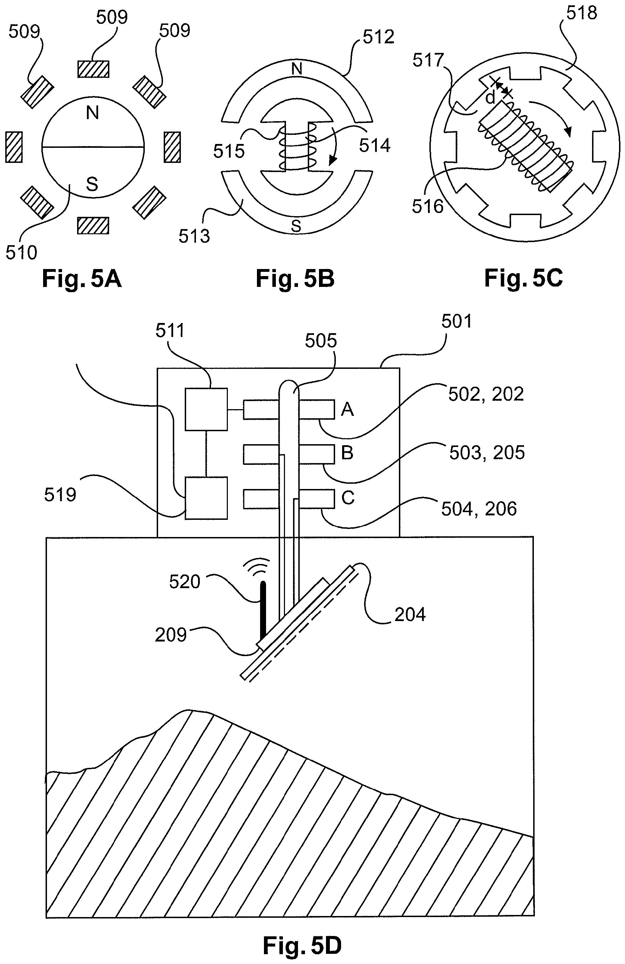

Fig. 5D zeigt ein weitergehend integriertes Ausführungsbeispiel eines Messgerätes. Im dargestellten Aufbau wird die Funktion des elektrischen Antriebes 202, 502 der Energieversorgung 205, 503 der Hochfrequenz- und Signalverarbeitungseinheit 209 sowie des Drehgebers 206, 504 auf einer einzigen Drehachse 505 realisiert.

Der elektrische Antrieb 202 ist im Schnittbild der Fig. 5A näher dargestellt. Die den Rotor umgebenden Statorwicklungen 509 werden durch geeignete Ansteuerung der Steuereinheit 511, beispielsweise einen Servoregler mit integrierter Vektoransteuerung, derart mit Spannungen versorgt, dass daraus ein resultierendes, sich um die Drehachse fortbewegendes Magnetfeld entsteht.

Der Rotor 510 kann Permanentmagnete enthalten, die dem äußeren Magnetfeld folgend den Rotor in eine Rotationsbewegung versetzen. Es kann auch vorgesehen sein, auf die Permanentmagnete im Rotor zu verzichten, und den Rotor nach dem Reluktanzprinzip in Drehung zu versetzen.

Die darunter befindliche Energieerzeugungseinheit 503 ist im Schnittbild der Fig. 5B näher dargestellt. Ein im stationären Sensorteil befestigter Magnet 512, 513, vorzugsweise ein Permanentmagnet, erzeugt ein stationäres Magnetfeld. Der in diesem Magnetfeld rotierende Anker 514, und hier insbesondere die darauf befindliche Ankerwicklung 515 erfährt durch die Rotation eine Magnetfeldänderung, woraufhin eine Induktionsspannung erzeugt wird, die zur Versorgung der Hochfrequenz- und Signalverarbeitungseinheit 209 verwendet werden kann.

Im Schnittbild der Fig. 5C ist die ebenfalls auf der Rotationsachse 505 angebrachte Winkelerfassungseinheit 504 näher dargestellt. Ein von der Hochfrequenz- und Signalverarbeitungseinheit 209 erzeugter Strom durchfließt die Sensorwicklung 516, woraufhin sich ein Magnetfeld aufbaut. In Abhängigkeit vom Abstand d 517 zwischen rotierendem Magnet und stationärem Metall 518 verändert sich der von der Spule 516 aufgenommene Strom. Aus dieser Änderung kann die Hochfrequenz- und Signalverarbeitungseinheit 209 auf den aktuellen Drehwinkel schließen. Selbstverständlich kann der Aufbau des elektrischen Antriebes sowie des Drehgebers auch im vorliegenden Beispiel nach jedem der weiter oben bereits dargestellten Prinzipien realisiert sein.

Die Übertragung der von der Hochfrequenz- und Signalverarbeitungseinheit 209 ermittelten Messwerte zur Kommunikationseinheit 519 hin kann in einfacher Art und Weise über eine digitale Nahbereichskommunikationseinrichtung 520 realisiert werden, beispielsweise durch Bluetooth, WLAN oder GSM oder auch durch eine analoge schnurlose Funkverbindung. Hierbei mag die Kommunikation verschlüsselt sein, um ein Abhören bzw. Manipulieren der Messsignale von Seiten Dritter zu unterbinden.

Des Weiteren ist auch eine optische oder elektromagnetische oder akustische Datenübertragung zur Kommunikationseinheit 519 im inneren des drehenden Rohres möglich (hier nicht dargestellt).

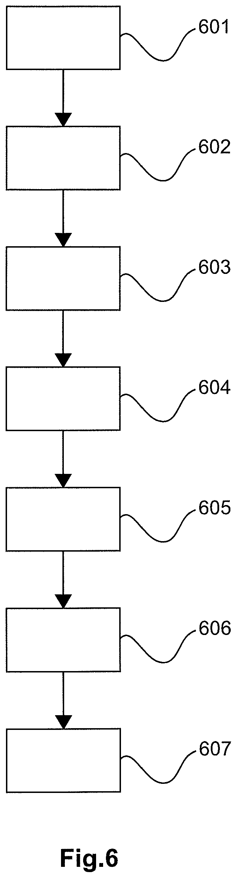

Fig. 6 zeigt ein Flussdiagramm eines Verfahrens gemäß einem Ausführungsbeispiel der Erfindung. In Schritt 601 wird die Antenneneinheit mit der für den Messbetrieb erforderlichen elektrischen Energie durch eine Energieversorgungs- und Kommunikationseinheit versorgt, welche über einen Schleifkontakt oder ein Spulenpaar an die Antenneneinheit gekoppelt ist. In Schritt 602 wird die Antenneneinheit in Rotation versetzt und in Schritt 603 erzeugt die Hochfrequenz- und Signalverarbeitungseinheit der Antenneneinheit, welche mit der Antenneneinheit mitrotiert, ein Messsignal, welches dann in Schritt 604 in Richtung Füllgutoberfläche abgestrahlt wird. Dieses Messsignal wird dann an der Füllgutoberfläche zumindest teilweise reflektiert und dann in Schritt 605 wieder von der Antenneneinheit aufgenommen. In Schritt 606 erfolgt ein zumindest teilweises Verarbeiten des empfangenen, reflektierten Messsignals durch die Hochfrequenz- und Signalverarbeitungseinheit, woraufhin diese das (vor)verarbeitete Messsignal in Schritt 607 an die Energieversorgungs- und Kommunikationseinheit überträgt, welche dann eine weitere Signalverarbeitung durchführen kann und die daraus gewonnenen Daten dann an eine entfernt angeordnete Zentrale übertragen kann. Hierfür kann eine Zweidrahtleitung vorgesehen sein, welche über eine 4 ... 20 mA Schnittstelle an das Füllstandmessgerät angeschlossen ist.

Ergänzend sei darauf hingewiesen, dass "umfassend" und "aufweisend" keine anderen Elemente oder Schritte ausschließt und "ein" oder "eine" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät (201) zur Bestimmung der Topologie einer Oberfläche eines Füllguts oder Schüttguts, aufweisend:
eine drehbare Antenneneinheit (204) mit:
einem Array an Strahlerelementen zum Abstrahlen eines Messsignals in Richtung einer Füllgutoberfläche und/oder zum Empfang des an der Füllgutoberfläche reflektierten Messsignals; und
einer Hochfrequenz- und Signalverarbeitungseinheit (209), die in die Antenneneinheit integriert ist, zum Erzeugen des Messsignals und zur Verarbeitung oder zur Vorverarbeitung des empfangenen reflektierten Messsignals;
eine Energieversorgungs- und Kommunikationseinheit (205), welche über einen Schleifkontakt (207) oder ein Spulenpaar (303, 305) an die Hochfrequenz- und Signalverarbeitungseinheit gekoppelt ist, um diese mit der für den Messbetrieb erforderlichen elektrischen Energie zu versorgen.

2. Füllstandmessgerät (201) nach Anspruch 1, weiter aufweisend:
eine Energieversorgungs- und Kommunikationsschnittstelle (210) zum Anschluss der Energieversorgungs- und Kommunikationseinheit (102) an eine Zweidrahtleitung (213), über welche das Füllstandmessgerät (201) mit der für den Messbetrieb notwendigen Energie versorgt werden kann und über welche Messdaten an eine entfernte Steuereinheit (211) übertragen werden können.

3. Füllstandmessgerät (201) nach einem der vorhergehenden Ansprüche,
wobei das erste Spulenpaar (303, 305) ein erstes Stator-Rotor-Spulenpaar (303, 305) zum drahtlosen Übertragen der zum Betrieb der Hochfrequenz- und Signalverarbeitungseinheit (209) der Antenneneinheit (204) erforderlichen Energie von der Energieversorgungs- und Kommunikationseinheit (205) an die Hochfrequenz- und Signalverarbeitungseinheit (209) der Antenneneinheit (204) ist.

4. Füllstandmessgerät (201) nach einem der vorhergehenden Ansprüche, weiter aufweisend:
ein zweites Stator-Rotor-Spulenpaar (304, 306) zum drahtlosen Übertragen der von der Antenneneinheit (204) empfangenen und von der Hochfrequenz- und Signalverarbeitungseinheit (209) verarbeiteten Messsignale von der Hochfrequenz- und Signalverarbeitungseinheit (209) an die Energieversorgungs- und Kommunikationseinheit (205).

5. Füllstandmessgerät (201) nach einem der vorhergehenden Ansprüche, weiter aufweisend:
einen Drehgeber (206) zur Bestimmung des Drehwinkels der Antenneneinheit (204).

6. Füllstandmessgerät (201) nach Anspruch 5, weiter aufweisend:
einen elektrischen Motor (202) zum Rotieren der Antenneneinheit (204) während des Abstrahlens des Messsignals;
wobei der erste Schleifkontakt (207) bzw. das erste Spulenpaar (303, 305) und der elektrische Motor auf einer gemeinsamen Drehachse (505) angeordnet sind.

7. Füllstandmessgerät (201) nach einem der vorhergehenden Ansprüche, weiter aufweisend:
eine drahtlose Nahbereichskommunikationseinrichtung (520), welche an der Hochfrequenz- und Signalverarbeitungseinheit (209) angebracht ist und zur Übertragung der von der Hochfrequenz- und Signalverarbeitungseinheit (209) erzeugten Messdaten ausgeführt ist.

8. Füllstandmessgerät (201) nach einem der vorhergehenden Ansprüche,
wobei der Schleifkontakt (207) oder das Spulenpaar (303, 305) sowohl zur Energieübertragung an die Hochfrequenz- und Signalverarbeitungseinheit (209) als auch zur Übertragung von Daten von der Hochfrequenz- und Signalverarbeitungseinheit (209) an die Energieversorgungs- und Kommunikationseinheit (205) ausgeführt ist.

9. Verwendung eines Füllstandmessgeräts nach einem der Ansprüche 1 bis 8 zur Bestimmung einer Viskosität und/oder Dichte einer bewegten Flüssigkeit bei bekannter Behältergeometrie über die Topologie der Flüssigkeitsoberfläche.

10. Verwendung eines Füllstandmessgeräts nach einem der Ansprüche 1 bis 8 zur Bestimmung eines Massestroms eines sich auf einem Förderband befindenden Schüttguts.

11. Verfahren zur Bestimmung der Topologie einer Oberfläche eines Füllguts oder Schüttguts, aufweisend:
Versorgen einer Antenneneinheit (204) mit der für den Messbetrieb erforderlichen elektrischen Energie durch eine Energieversorgungs- und Kommunikationseinheit (205), welche über einen Schleifkontakt (207) oder ein Spulenpaar (303, 305) an die Antenneneinheit gekoppelt ist;
Drehen einer Antenneneinheit;
Erzeugen eines Messsignals durch eine Hochfrequenz- und Signalverarbeitungseinheit (209), die in die Antenneneinheit integriert ist;
Abstrahlen eines Messsignals in Richtung einer Füllgutoberfläche und/oder Empfangen des an der Füllgutoberfläche reflektierten Messsignals durch einen Array an Strahlerelementen der Antenneneinheit;
Verarbeiten oder Vorverarbeiten des empfangenen reflektierten Messsignals durch die Hochfrequenz- und Signalverarbeitungseinheit.

## Claims

1. Fill level measurement device (201) for determining the topology of a surface of a filling material or bulk material, comprising:
a rotatable antenna unit (204) having:
an array of radiator elements for emitting a measurement signal towards a filling material surface and/or for receiving the measurement signal reflected from the filling material surface; and
a high-frequency and signal processing unit (209), which is integrated in the antenna unit, for generating the measurement signal and for processing or for preprocessing the received reflected measurement signal;
a power supply and communication unit (205) which is coupled to the high-frequency and signal processing unit by means of a sliding contact (207) or a pair of coils (303, 305) in order to supply said high-frequency and signal processing unit with the electrical power required for the measurement operation.

2. Fill level measurement device (201) according to claim 1, further comprising:
a power supply and communications interface (210) for connecting the power supply and communications unit (102) to a two-wire line (213), by means of which it is possible to supply the fill level measurement device (201) with the power needed for the measurement operation and by means of which measurement data can be transmitted to a remote control unit (211).

3. Fill level measurement device (201) according to any of the preceding claims,
wherein the first pair of coils (303, 305) is a first stator-rotor pair of coils (303, 305) for wirelessly transmitting the power required for operating the high-frequency and signal processing unit (209) of the antenna unit (204) from the power supply and communication unit (205) to the high-frequency and signal processing unit (209) of the antenna unit (204).

4. Fill level measurement device (201) according to any of the preceding claims, further comprising:
a second stator-rotor pair of coils (304, 306) for wirelessly transmitting the measurement signals received by the antenna unit (204) and processed by the high-frequency and signal processing unit (209) from the high-frequency and signal processing unit (209) to the power supply and communication unit (205).

5. Fill level measurement device (201) according to any of the preceding claims, further comprising:
a rotary encoder (206) for determining the angle of rotation of the antenna unit (204).

6. Fill level measurement device (201) according to claim 5, further comprising:
an electric motor (202) for rotating the antenna unit (204) while the measured signal is being emitted;
wherein the first sliding contact (207) or the first pair of coils (303, 305) and the electric motor are arranged on a common rotary schaft (505).

7. Fill level measurement device (201) according to any of the preceding claims, further comprising:
a wireless short-range communications apparatus (520) which is attached to the high-frequency and signal processing unit (209) and is designed to transmit the measurement data generated by the high-frequency and signal processing unit (209).

8. Fill level measurement device (201) according to any of the preceding claims,
wherein the sliding contact (207) or the pair of coils (303, 305) is designed to transmit power to the high-frequency and signal processing unit (209) and to transmit data from the high-frequency and signal processing unit (209) to the power supply and communication unit (205).

9. Use of a fill level measurement device according to any of claims 1 to 8 for determining a viscosity and/or density of a moving liquid with a known container geometry over the topology of the liquid surface.

10. Use of a fill level measurement device according to any of claims 1 to 8 for determining a mass flow of a bulk material on a conveyor belt.

11. Method for determining the topology of a surface of a filling material or bulk material, comprising:
supplying an antenna unit (204) with the electrical power required for the measurement operation by means of a power supply and communication unit (205) which is coupled to the antenna unit by means of a sliding contact (207) or a pair of coils (303, 305);
rotating an antenna unit;
generating a measurement signal by means of a high-frequency and signal processing unit (209) which is integrated in the antenna unit;
emitting a measurement signal towards a filling material surface and/or receiving the measurement signal reflected from the filling material surface by means of an array of radiator elements of the antenna unit;
processing or preprocessing the received reflected measurement signal by means of the high-frequency and signal processing unit.

## Revendications

1. Appareil de mesure de niveau de remplissage (201) destiné à déterminer la topologie d'une surface d'un matériau de remplissage ou d'un matériau en vrac, comportant :
une unité d'antenne rotative (204) comportant :
un réseau d'éléments rayonnants pour rayonner un signal de mesure en direction d'une surface du matériau de remplissage et/ou pour recevoir le signal de mesure réfléchi par la surface du matériau de remplissage, et
une unité de traitement de signaux à haute fréquence (209) intégrée dans l'unité d'antenne, pour générer le signal de mesure et pour traiter ou pré-traiter le signal de mesure réfléchi reçu,
une unité de fourniture d'énergie et de communication (205) couplée à l'unité de traitement de signaux à haute fréquence par un contact glissant (207) ou une paire de bobines (303, 305) afin de fournir à cette unité l'énergie électrique requise pour l'opération de mesure.

2. Appareil de mesure de niveau de remplissage (201) selon la revendication 1, comportant en outre :
une interface de fourniture d'énergie et de communication (210) pour raccorder l'unité de fourniture d'énergie et de communication (102) à une ligne bifilaire (213), par l'intermédiaire de laquelle l'énergie nécessaire à l'opération de mesure peut être fournie à l'appareil de mesure de niveau de remplissage (201) et par l'intermédiaire de laquelle des données de mesure peuvent être transmises à une unité de commande distante (211).

3. Appareil de mesure de niveau de remplissage (201) selon l'une des revendications précédentes,
dans lequel la première paire de bobines (303, 305) est une première paire de bobines de stator-rotor (303, 305) pour transmettre sans fil l'énergie requise pour faire fonctionner l'unité de traitement de signaux à haute fréquence (209) de l'unité d'antenne (204), de l'unité de fourniture d'énergie et de communication (205) à l'unité de traitement de signaux à haute fréquence (209) de l'unité d'antenne (204).

4. Appareil de mesure de niveau de remplissage (201) selon l'une des revendications précédentes, comportant en outre :
une seconde paire de bobines de stator-rotor (304, 306) pour transmettre sans fil des signaux de mesure, reçus par l'unité d'antenne (204) et traités par l'unité de traitement de signaux à haute fréquence (209), de l'unité de traitement de signaux à haute fréquence (209) à l'unité de fourniture d'énergie et de communication (205).

5. Appareil de mesure de niveau de remplissage (201) selon l'une des revendications précédentes, comportant en outre :
un codeur rotatif (206) pour déterminer l'angle de rotation de l'unité d'antenne (204).

6. Appareil de mesure de niveau de remplissage (201) selon la revendication 5, comportant en outre :
un moteur électrique (202) pour faire tourner l'unité d'antenne (204) pendant le rayonnement du signal de mesure,
dans lequel le premier contact glissant (207) ou la première paire de bobines (303, 305) et le moteur électrique sont agencés sur un axe de rotation (505) commun.

7. Appareil de mesure de niveau de remplissage (201) selon l'une des revendications précédentes, comportant en outre :
un dispositif de communication sans fil à courte portée (520) fixé sur l'unité de traitement de signaux à haute fréquence (209) et configuré pour transmettre les données de mesure générées par l'unité de traitement de signaux à haute fréquence (209).

8. Appareil de mesure de niveau de remplissage (201) selon l'une des revendications précédentes,
dans lequel le contact glissant (207) ou la paire de bobines (303, 305) est configuré aussi bien pour transmettre de l'énergie à l'unité de traitement de signaux à haute fréquence (209) que pour transmettre des données de l'unité de traitement de signaux à haute fréquence (209) à l'unité de fourniture d'énergie et de communication (205).

9. Utilisation d'un appareil de mesure de niveau de remplissage selon l'une des revendications 1 à 8 pour déterminer une viscosité et/ou une densité d'un liquide en mouvement pour une géométrie de réservoir connue par le biais de la topologie de la surface du liquide.

10. Utilisation d'un appareil de mesure de niveau de remplissage selon l'une des revendications 1 à 8 pour déterminer un débit massique d'un matériau en vrac se trouvant sur une bande de convoyage.

11. Procédé pour déterminer la topologie d'une surface d'un matériau de remplissage ou d'un matériau en vrac, comportant les étapes consistant à :
fournir à une unité d'antenne (204) l'énergie électrique requise pour l'opération de mesure, par l'intermédiaire d'une unité de fourniture d'énergie et de communication (205) couplée à l'unité d'antenne par un contact glissant (207) ou une paire de bobines (303, 305),
faire tourner une unité d'antenne,
générer un signal de mesure par l'intermédiaire d'une unité de traitement de signaux à haute fréquence (209) intégrée dans l'unité d'antenne,
rayonner un signal de mesure en direction d'une surface du matériau de remplissage et/ou recevoir le signal de mesure réfléchi par la surface du matériau de remplissage par l'intermédiaire d'un réseau d'éléments rayonnants de l'unité d'antenne,
traiter ou pré-traiter le signal de mesure réfléchi reçu par l'unité de traitement de signaux à haute fréquence.
